Europäisches Patentamt

European Patent Office

Office européen des brevets

(19)

(11) EP 0 917 146 A1

(12) EUROPEAN PATENT APPLICATION

(43) Date of publication:
19.05.1999 Bulletin 1999/20

(51) Int Cl.6: **G11B 20/18, H04N 5/94**

(21) Application number: 99200345.9

(22) Date of filing: 03.03.1995

(84) Designated Contracting States:
AT DE FR GB NL

(30) Priority: 09.03.1994 EP 94200594

(62) Document number(s) of the earlier application(s) in accordance with Art. 76 EPC:
95200523.9 / 0 671 739

(71) Applicant: Koninklijke Philips Electronics N.V.
5621 BA Eindhoven (NL)

(72) Inventors:
• Denissen, Adrianus Johannes Maria
Prof. Holstlaan 6, 5656 AA Eindhoven (NL)

• Brüls, Wilhelmus Hendrikus Alfonsus
Prof. Holstlaan 6, 5656 AA Eindhoven (NL)
• Tolhuizen, Ludovicus Marinus Gerardus Maria
Prof. Holstlaan 6, 5656 AA Eindhoven (NL)

(74) Representative: van der Kruk, Willem Leonardus
INTERNATIONAAL OCTROOIBUREAU B.V.,
Prof. Holstlaan 6
5656 AA Eindhoven (NL)

Remarks:
This application was filed on 05 - 02 - 1999 as a divisional application to the application mentioned under INID code 62.

(54) **Conversion arrangement for a magnetic recording/reproducing apparatus of the D-type**

(57) An encoder arrangement (28) for adapting a data signal for recording of the datasignal on a D-type magnetic recording apparatus has been proposed. The arrangement comprises an error correction encoding unit (3), a converter unit (6) and a shuffling unit (9). A decoder arrangement (30) for reconverting the signal obtained after reproduction from a D-type reproduction apparatus has also been proposed. It comprises a deshuffling unit (14), an error correction decoding unit (17) and a reconverter unit (20).

FIG.1A

EP 0 917 146 A1

**FIG.1B**

## Description

The invention relates to an encoder arrangement for converting a digital data signal into a digital input signal which is suitable for receiving by a magnetic recording apparatus of the D-type, for recording the input signal in tracks on a magnetic record carrier, the magnetic recording apparatus of the D-type comprising

- first error protection encoding means for carrying out an error protection encoding on the digital input signal,
- first shuffling means for carrying out a data shuffling step on the digital input signal,
- channel encoding means for converting the digital input signal processed in the error protection encoding means and the shuffling means into a recording signal suitable for recording on the magnetic record carrier, to a decoder arrangement for a magnetic reproducing apparatus of the D-type, a magnetic recording apparatus of the D-type, provided with the encoder arrangement, and a magnetic reproducing apparatus of the D-type provided with the decoder arrangement. The invention also relates to an encoding method.

A magnetic recording/reproducing apparatus of the D-type is, as an example, a magnetic recording/reproducing apparatus of the D1-type. Other examples of magnetic recording/reproducing apparatuses of the D-type are for example recording/reproducing apparatuses of the D2-type, the D3-type or the D5-type.

A magnetic recording/reproducing apparatus of the D1-type is also identified as a 4:2:2 component digital video recorder, and is extensively described in the book 'Introduction to the 4:2:2 digital video tape recorder', by S. Gregory, 1988 Pentech press, London. Further, the magnetic video recorder of the D1-type is the subject of the D1 standard of the EBU, given in the EBU technical document Tech. 3252-E of September 1986, which is also published in SMPTE Journal, March 1986, pp. 359 to 400.

The magnetic recording/reproducing apparatus described in the foregoing is intended for use as a recorder/reproducer for recording/reproducing a standard definition digital video signal having a net bitrate of substantially 166 Mb/s that is supplied to its input/output terminal.

The data signal supplied for recording can, as an example be a data compressed high definition digital video signal, which high definition digital video signal has, in uncompressed form, a net bitrate of substantially 664 Mb/s. In order to record this high definition digital video signal on a magnetic recorder of the D-type, it will be clear that a data reduction on the high definition video signal must be carried out, so as to bring the bitrate down to a value such that it has a bitrate which is sufficiently low for recording on the magnetic record carrier by means of the recording apparatus of the D-type.

However, as a result of this data compression carried out, the data reduced high definition video signal will not have the characteristics of the standard definition digital video signal that is normally supplied to the D-type magnetic video recorder. As a consequence, recording and reproduction on/from such a D-type magnetic video recorder is not well possible without a further data processing carried out on the data reduced high definition digital video signal.

More specifically, the n-p fixed binary values $FW_{p+1}$ to $FW_n$ of the fixed auxiliary packet have been obtained by an error protection encoding step carried out on the following packet of p+1 binary values:

$$['1',FW_1,FW_2, \ldots ,FW_p],$$

where '1' is the m-bit digital word denoting the decimal value '1'.

By doing so, this provides an error protection on the value $\alpha_{def}$ transmitted, so that the value for $\alpha_{def}$ is less vulnerable to errors occurring during the recording and reproduction step.

In another aspect of the invention, the encoding apparatus is characterized as per claim 6.

The encoder arrangement can be in the form of a separate unit, so that the D-type videorecorder can be used, without altering the recorder. The encoder arrangement may however also be included in the D-type videorecorder.

A decoder arrangement in accordance with the invention is characterized as per claim 8. In another aspect of the invention, the decoder is characterized as per claim 9.

It should be noted that EP-A 570,214 discloses a magnetic recording/ reproducing apparatus, for recording digital HD video signals in slant tracks on the record carrier, amongst others by increasing the number of tracks or by recording video information in the audio sectors of a track.

These and other aspects of the invention will be further elucidated with reference to the embodiments given in the figure description. In this figure description shows

figure 1a shows an embodiment of the encoder arrangement and figure 1b an embodiment of the decoder arrangement,

figure 2a the serial datastream of the input datasignal of the arrangement, and figure 2b the serial datastream of the output signal of the error correction encoding unit in the encoder arrangement,

figure 3 the conversion as carried out in the converter unit in the encoding arrangement,

figure 4 the serial datastream of the output signal of the converter unit in the encoder arrangement,

figure 5 an embodiment of the shuffling unit in the encoder arrangement,

figure 6 an embodiment of the converter unit in the encoder arrangement, and

figure 7 an embodiment of the reconverter unit in the decoder arrangement.

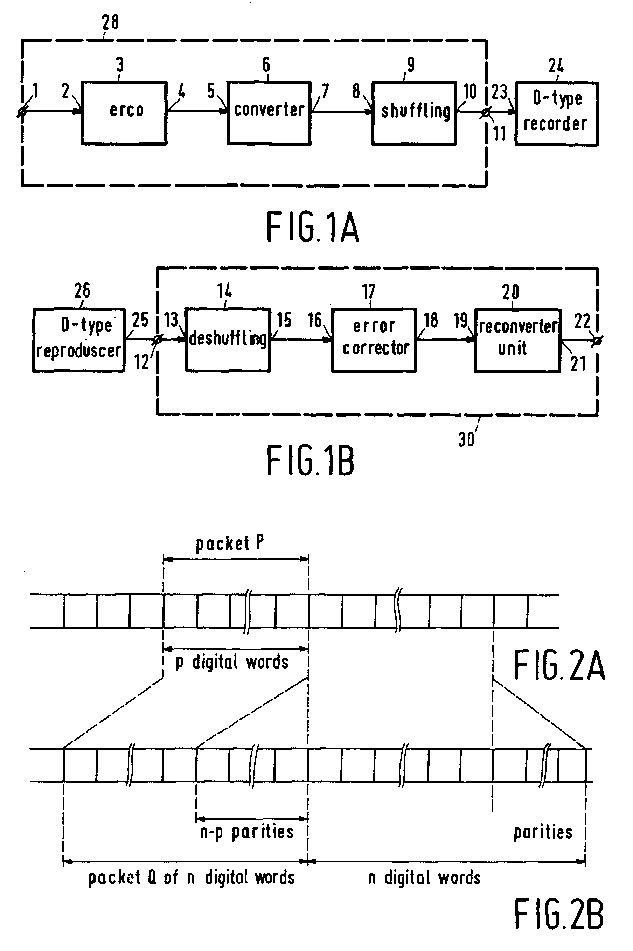

Figure 1a shows schematically and in block diagram an embodiment of the encoder arrangement 28. The encoder arrangement 28 has an input terminal 1 which is coupled to an input 2 of an error correction encoding unit 3, an output 4 of which is coupled to an input 5 of a converter 6. An output 7 of the converter 6 is coupled to an input 8 of a shuffling unit 9, an output 10 of which is coupled to the output terminal 11 of the encoder arrangement. The output terminal 11 is shown in figure 1a as being coupled to an input 23 of the magnetic recording apparatus of the D-type 24.

Figure 1b shows schematically and in block diagram an embodiment of the decoder arrangement 30. The decoder arrangement 30 has an input terminal 12 which is coupled to an input 13 of a deshuffling unit 14, an output 15 of which is coupled to an input 16 of an error corrector 17. An output 18 of the error corrector 17 is coupled to an input 19 of a reconverter unit 20, an output 21 of which is coupled to the output terminal 22 of the decoder arrangement 30. The input terminal 12 is shown in figure 1b as being coupled to an output 25 of the magnetic reproducing apparatus 26 of the D-type.

Special attention should be paid to the sequence in which the units are serially arranged in the encoder arrangement 28 and the decoder arrangement 30. In order to realize an error correction step on the $\alpha_{def}$ values to be explained later, the reconverter unit 20 should be preceded by the error corrector 17, whereas the error correction encoder 3 precedes the converter 6.

The recording apparatus 24 and the reproducing apparatus 26 of the D-type, such as of the D1-type, are generally known in the art, see the references cited in the foregoing, that may be incorporated by reference.

As has been explained previously, a data reduced high definition digital video signal, which has a bitrate of about 150 Mb/s, is applied to the input terminal 1. In the error correction encoder 3, an error correction encoding is carried out on each time a packet P of p digital words (bytes), of 8 bit each. Figure 2a shows the serial datastream of the 8-bit words applied to the input terminal 1. As a result of the error correction encoding, n-p parity bytes are added to the packet of bytes, so as to obtain subsequent packets Q of n digital words (bytes) of 8 bit each. This is shown in figure 2b. The serial datastream in figure 2b is shown on an expanded timescale. It should however be understood that the length of time of the packets Q in figure 2b is the same as the length of time of the packets P in figure 2a. Thus, an increase in bitrate has occurred in the output signal of the error correction encoder 3, because of the adding of the parity bytes.

The packets Q, generated by the encoder 3 are supplied to the converter 6. The converter 6 is needed, as the serial datastream of digital words supplied by the encoder 3 comprise data words that are inadmissible in the input datastream of the D-type recorder 24. That is: both the p digital words in a packet Q, as well as the n-p parity words in the packet can include inadmissible datawords. Those inadmissible datawords are the datawords '00' and 'FF'. The converter 6 is therefore available for converting the inadmissible digital words into admissible digital words.

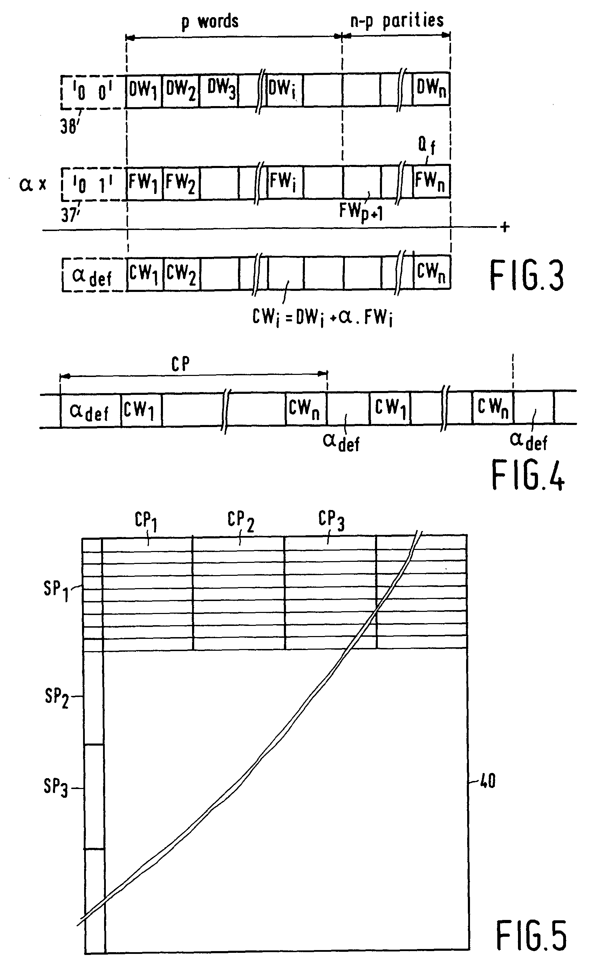

To that purpose, the converter 6 carries out a computation on the packets of n digital words, denoted $DW_1$ to $DW_n$, as will be explained with reference to figure 3. A fixed packet $Q_f$ of n fixed 8-bit digital words $FW_1$ to $FW_n$ is available. The fixed packet has been obtained as follows.

The p digital words $FW_1$ to $FW_p$ can be chosen more or less freely, as will be explained later. Next, the n-p digital words $FW_{p+1}$ to $FW_n$ are obtained by carrying out the same error correction encoding on the following packet of words

$$['01'(hex), FW_1, FW_2, ..., FW_p]$$

as has been carried out in the error correction encoder 3 on the packets P. Figure 3 shows this packet of words in the centre line, where the block 37 given in broken lines indicates the digital word '01' (hex) that has been added fictitiously in front of the packet of words $FW_1$ to $FW_p$.

It should be noted here that calculating the parity words $FW_{p+1}$ to $FW_n$ using the packet of words $['01' (hex), FW_1, ....., FW_p]$, results in different parity words $FW_{p+1}$ to $FW_n$ than if the parity words would have been calculated using the packet of words $[FW_1, ... , FW_p]$.

Further, carrying out an error correction encoding in the encoder 3 on the packet P $[DW_1, .... , DW_p]$ having p digital words, results in n-p parity words. This can be realized by carrying out an error correction encoding on a packet P', being the packet P and having one additional digital word '00' (hex) added in front of the packet P, that is the packet $['00'(hex), DW_1, ... , DW_p]$. This packet is shown in figure 3, the top line, where the block 38 given in broken lines indicates the added word '00' (hex).

Adding the digital word '01' (hex) to the p digital words $FW_1$ to $FW_p$ for calculating the parity words $FW_{p+1}$ to $FW_n$ in the fixed packet $Q_f$, results in the fact that, as will be explained later, the value $\alpha_{def}$ has been error correction encoded, so that an error correction step can be applied during reproduction on $\alpha_{def}$.

With the fixed packet $Q_f$ so obtained, corresponding words $DW_i$ and $FW_i$ of the packets Q and $Q_f$ are added in conformity with the following formula, so as to obtain converted digital words $CW_i$:

$$DW_i + \alpha.FW_i = CW_i,$$

where $\alpha$ is a constant. Calculations are carried out in the Galois field $GF(2^m)$, where $m=8$ in the present case. Otherwise said, calculations are carried out on $DW_i$ and $FW_i$, where the values for $DW_i$ and $FW_i$ are elements of a closed set of values, and where the resulting values $CW_i$ of the calculation are elements from the same closed set of values. As a result, the words $CW_i$ are again 8-bit digital words, just as the words $DW_i$ and $FW_i$ (in the present example). Reference is made in this respect to the book 'Introduction to the 4:2:2 digital video tape recorder', more specifically, the appendix A in that book on p. 172 to 189.

As a general statement it can be said that the fixed words $FW_i$ can not have the value '00', as, for the case that the corresponding digital word is '00' or 'FF', the resulting converted words $CW_i$ equal '00'. On the other hand, if it is known that some specific digital words $DW_i$ are (by definition) unequal to '00' and 'FF', the corresponding fixed digital words $FW_i$ can be chosen to be equal to '00'.

The algorithm carried out in the converter 6 is such that for $i=1$, the converted word $CW_1$ is calculated, and it is determined for which values of $\alpha$ the converted word $CW_1$ equals one of the inadmissible datawords '00' or 'FF'. Those values for $\alpha$ are considered as inadmissible. Next, the procedure is repeated for $i=2$. Again, it is determined which of the remaining values of $\alpha$ result in inadmissible converted words. Those values for $\alpha$ are also deleted. The procedure is again repeated for $i=3$. Again, it is determined which of the remaining values of $\alpha$ result in inadmissible converted words, which values are consequently also deleted. This procedure is repeated until all the words $DW_i$ have been processed in this way. After termination, one or more values of $\alpha$ remain. One of them ($\alpha_{def}$) is used to carry out the computation

$$DW_i + \alpha_{def}.FW_i = CW_i.$$

The packet thus processed is supplied to the output 7, together with the value $\alpha_{def}$. This is shown in figure 3, where the value $\alpha_{def}$ is added in front of the packet of converted datawords $CW_1$ to $CW_n$, that are supplied to the output 7. This process is repeated for subsequent packets. As a result, the serial datastream as shown in figure 4 is obtained.

The calculation explained above with reference to figure 3, can be interpreted in a different way, namely in that the following calculation is carried out:

$$['00'(hex), DW_1, ... , DW_n] + \alpha_{def}.['01'(hex), FW_1, ..., FW_n] =$$

$$= [\alpha_{def}(hex), CW_1, ... , CW_n].$$

As none of the data words in the packets CP are allowed to be equal to '00'(hex) or 'FF'(hex), also $\alpha_{def}$ can not be equal to '00'(hex) or 'FF'(hex). This means that, when starting the calculation for determining those values for $\alpha$ that are admissible, the values '00'(hex) and 'FF'(hex) can already be deleted from the available group of values for $\alpha$.

It will be understood that sufficient values for $\alpha$ must be present in order to have at least one value for $\alpha$ left at the end of the computation carried out on the bytes in a packet Q. With an 8-bit digital word for $\alpha$, this means that n can be equal to 127 at maximum, $n1. (2^8-2)/2$. Further, as has been said previously, if one or more of the digital words $DW_i$ are known to be unequal to '00' and 'FF', one can choose the corresponding fixed word $CW_i$ equal to '00'. Consequently, for this (these) value (s) for i, no inadmissible value for $\alpha$ will result, and thus can n be chosen larger.

The serial output datastream of the converter 6 comprises converted packets CP, comprising n 8-bit converted digital words, preceded by a value $\alpha_{def}$ for the corresponding value of $\alpha$.

The serial datastream thus obtained is supplied to a shuffling unit 9, in which the datastream is shuffled.

It should be noted that, in order to error protect $\alpha_{def}$, one could have tried to carried out an error correction encoding after the converter 6. This would however have led to the generation of parity words that would violate the '00'(hex)- and 'FF'(hex)-constraint. Therefore, the error correction encoding is carried out prior to conversion in the converter 6. However, in the way as explained above in which the fixed packet $Q_f$ has been derived, this has led to a datastream that is error protected, inclusive the words $\alpha_{def}$.

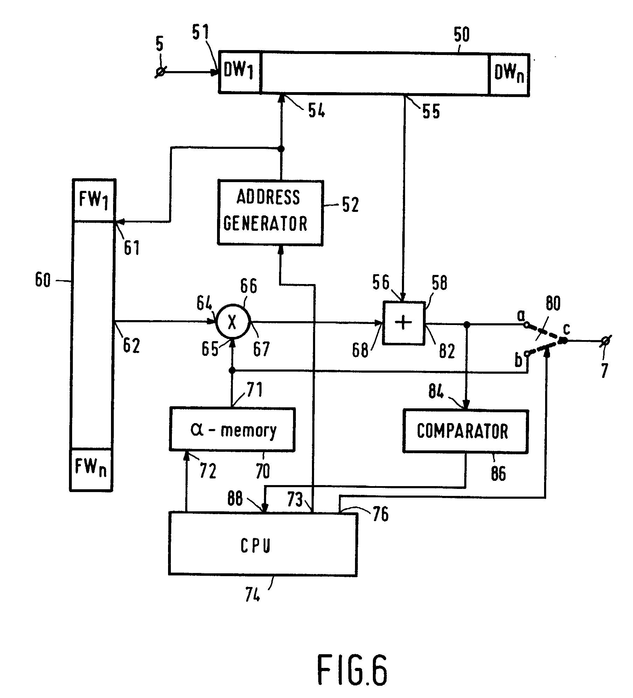

Figure 5 shows a way in which the converted serial datastream can be shuffled. Figure 5 shows a memory 40, which is comprised in the shuffling unit 9, in which memory the converted packets $CP_1$, $CP_2$, $CP_3$, and so on, of the output signal of the converter 6 are stored in a linewise direction. The information stored in the memory 40 is subsequently read out in a rowwise direction. As a result, packets $SP_1$, $SP_2$, $SP_3$, and so on, of shuffled data are read out to form a serial datastream, which is supplied to the output 10. The serial datastream thus obtained is supplied to the D-type recorder 24 and can be recorded on the magnetic record carrier (not shown).

The shuffling can be done in a different way. As another example, the serial datastream of converted packets can be stored in a rowwise direction, and can be read out in a linewise direction.

A further shuffling step can be carried out. One possibility is that, during a linewise read-out of the data from the memory 40, a shuffling is carried out on the data stored in a line, or in that during a rowwise read-out, a shuffling is carried out on the data stored in a row. Another possibility is that during the linewise read-in of the data into the memory 40, a shuffling is carried out on the data to be stored in a line, or in that during a rowwise read-in, a shuffling is carried out on the data to be stored in a row.

It should further be noted that there is no need for the memory 40 to have a width or height such that an integer number of packets CP can be stored in a line (or row).

Figure 6 shows an embodiment of the converter 6. The converter 6 comprises a memory 50 having an input 51 coupled to the input terminal 5. A packet Q of n digital words $DW_1$ to $DW_n$ can be stored in the memory 50 under the influence of addresses supplied by an address generator 52 to an address input 54. An output 55 of the memory 50 is coupled to an input 56 of an adder unit 58. The converter further comprises a memory 60 in which the fixed packet $Q_f$ of words $FW_1$ to $FW_n$ is stored. Addresses generated by the address generator 52 are also supplied to an address input 61 of the memory 60. An output 62 of the memory 60 is coupled to an input 64 of a multiplier 66, an output 67 of which is coupled to an input 68 of the adder unit 58. A further memory 70 in which the values for $\alpha$ are stored is available, an output 71 is coupled to an input 65 of the multiplier 66. As has been explained previously, the memory 70 does not comprise the values '00'(hex) or 'FF'(hex).

Address signals are supplied to an address input 72 by a central processing unit 74. A control signal is supplied by the CPU 74 via an output 73 to the address generator 52, in order for the address generator 52 to supply subsequent addresses for the memories 50 and 60. A further control signal is supplied by the CPU 74 for a controllable switch 80, which has a first terminal a coupled to an output 82 of the adder unit 58, a second terminal b coupled to the output 71 of the memory 70 and a terminal c coupled to the output 7 of the converter. The output 82 of the adder unit 58 is further coupled an input 84 of a comparator 86, an output of which is coupled to a control input 88 of the CPU 74.

It is assumed that a packet Q has been stored in the memory 50. The procedure starts in that an address is generated by the address generator 52 under the influence of a control signal from the CPU 74, so that the first memory locations in the memories 50 and 60 are addressed. The first digital word $DW_1$ and the first fixed word $FW_1$ are supplied to the outputs 55 and 62 respectively. Under the influence of a control signal from the CPU 74 applied to the control signal input 72, the memory 70 supplies a first value for $\alpha$ to its output 71. At the output 67 the value $\alpha.FW_1$ is now available, so that the value $DW_1+\alpha.FW_1$ is supplied to the input 84 of the comparator 86. This value is compared to '00' and 'FF'. If there is no equality, the comparator 86 generates a first detection signal, and if an equality with one of the two inadmissible words has been determined, a second detection signal is generated and supplied to the input 88 of the CPU 74. Then, the next value for $\alpha$ is generated and again, the comparator compares $DW_1+\alpha.FW_1$ with '00' and'FF'. This is repeated for all available values for $\alpha$. CPU deletes those values for $\alpha$ from further use, for which the comparator 86 has detected an equality with '00' or 'FF'.

Next, the following address is generated by the address generator 52 under the influence of a control signal from the CPU 74, so that the second memory locations in the memories 50 and 60 are addressed. The second digital word $DW_2$ and the second fixed word $FW_2$ are supplied to the outputs 55 and 62 respectively. Under the influence of a control signal from the CPU 74 applied to the control signal input 72, the memory 70 supplies the first remaining value for $\alpha$ to its output 71. Now the value $DW_2+\alpha.FW_2$ is supplied to the input 84 of the comparator 86. This value is compared to '00' and 'FF'. If there is no equality, the comparator 86 generates a first detection signal, and if an equality with one of the two inadmissible words has been determined, a second detection signal is generated and supplied to the input 88 of the CPU 74. Then, the next remaining value for $\alpha$ is generated and again, the comparator compares $DW_2+\alpha.FW_2$ with '00' and 'FF'. This is repeated for all remaining values for $\alpha$. CPU again deletes those values for $\alpha$ from further use, for which the comparator 86 has detected an equality with '00' or'FF'. This is repeated for all n words in the memory 50. A number of possible values for $\alpha$ have been deleted in the above procedure, but not all of them. If there are more than one left, one of the remaining values for $\alpha$ is now chosen by the CPU 74 as $\alpha_{def}$. The value for $\alpha_{def}$ chosen can, as an example, be the first value for $\alpha$ still present in the memory 70. The CPU 74 now generates such a control signal to the memory 70 that $\alpha_{def}$ is supplied to the input 65 of the multiplier 66.

A control signal is supplied by the CPU 74, via its output 76 to the switch 80, so that this switch 80 takes the position b-c. The value $\alpha_{def}$(hex) is supplied to the output 7. Next, the switch is set to the position a-c. Now the sequence of addresses is repeated so that all the words $DW_1$ to $DW_n$ are supplied to the output 55 and all the fixed words $FW_1$ to $FW_n$ are supplied to the output 62, so that the converted words $CW_i$ can be subsequently supplied to the output 7.

It will be clear that instead of a memory 70, the converter 6 could comprise a counter for generating the subsequent values for $\alpha$.

The decoder arrangement given in figure 1b will now be further discussed.

Deshuffling in the deshuffling unit 14 means that a memory, as shown in figure 5 is present. If during shuffling the memory was filled in a linewise direction and read out in a rowwise direction, the deshuffling takes place by filling the memory in a rowwise direction and reading out the memory in a linewise direction.

Error detection and error correction in the corrector 17 is carried out each time on a packet CP. This packet includes n+1 data words, where the first data word is the value $\alpha_{def}$, which is followed by p words $CW_1$, $CW_2$, ...., $CW_p$. Those words are followed by the words $CW_{p+1}$ to $CW_n$ that act as parity words. An error correction step can thus be carried out on the p+1 words $\alpha_{def}$ and $CW_1$ to $CW_p$. Thus, if the value for $\alpha_{def}$ appears the be incorrect, it can be corrected by the correction decoder 17. In this way the packet CP supplied to the input 16 can be corrected so as to obtain a corrected packet CP' at the output 18.

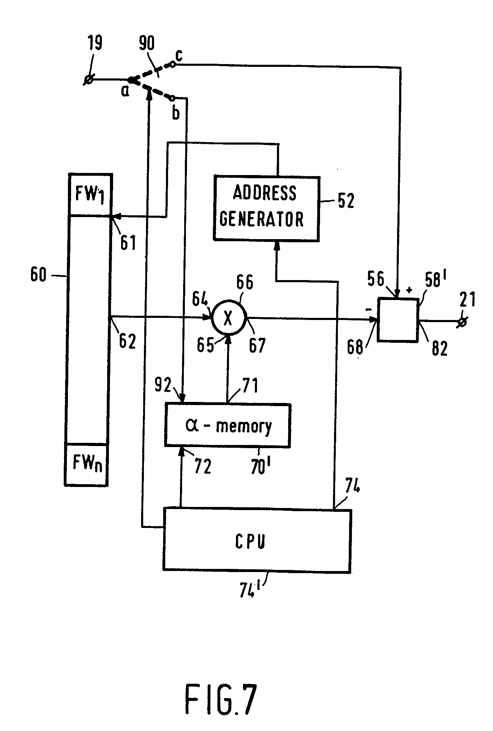

An embodiment of the reconverter unit 20 is shown in figure 7. The reconverter unit 20 looks a little bit like the converter of figure 6, and comprises memories 60 and 70', address generator 52, multiplier 66 and a subtractor unit 58' instead of the adder 58. The memory 60 has the same n fixed data words $FW_1$ to $FW_n$ stored as the memory 60 in figure 6. A controllable switch 90 is present, a first terminal a of which is coupled to the input 19 of the reconverter unit, a second terminal b of which is coupled to the input 92 of the memory 70', and a third terminal c of which is coupled to an input 56 of the subtractor unit 58'. The memory 70' is for storing one value for $\alpha_{def}$.

Upon receiving a corrected packet CP', the CPU 74' generates a control signal for the switch 90, so that it is set in the position a-b. The value for $\alpha_{def}$ can now be loaded in the memory 70' under the influence of a control signal supplied by the CPU 74' to the input 72. Under the influence of a second control signal, the switch 90 is placed in the position a-c, so that the subsequent datawords $CW_i$ are supplied to the subtractor 58'. Under the influence of a control signal to the address generator 52, addresses are generated and supplied to the memory 60, so that the fixed datawords $FW_i$ are subsequently applied to the multiplier 66.

The reconverter unit 20 thus carries out the following calculation in the previously described Galois field GF($2^m$):

$$RW_i = CW_i - \alpha_{def}.FW_i.$$

As a result, reconverted datawords $RW_i$ that are equal to the original datawords $DW_i$ occur at the output 21.

As a result a replica of the original datasignal, as applied to the input 1 of the arrangement 28 is obtained at the output 22 of the arrangement 30.

It should be noted that the determination of the value for $\alpha$ can also be based on other constraints to be posed on the converted datastream.

In a further embodiment, it is possible to carry out a more complex conversion in the conversion unit 6, such as calculating the converted words by means of the equation:

$$CW_i = DW_i + \alpha.FW_i + \beta.GW_i.$$

Now, two fixed packets $FW_i$ and $GW_i$ are present, and a value for $\alpha_{def}$ and $\beta_{def}$ are calculated so as to enable a conversion in accordance with the above formula. Adding one or more terms, such as the β-term, results in more freedom of converting the digital data words such that also other constraints can be satisfied.

An encoder arrangement for adapting a data signal for recording of the datasignal on a D-type magnetic recording apparatus has been proposed. The arrangement comprises an error correction encoding unit (3), a converter unit (6) and a shuffling unit (9). A decoder arrangement (30) for reconverting the signal obtained after reproduction from a D-type reproduction apparatus has also been proposed. It comprises a deshuffling unit (14), an error correction decoding unit (17) and a reconverter unit (20).

**Claims**

1. Encoder arrangement for converting a digital data signal into a digital input signal which is suitable for receiving by a magnetic recording apparatus of the D-type, for recording the input signal in tracks on a magnetic record carrier, the magnetic recording apparatus of the D-type comprising

   - first error protection encoding means for carrying out an error protection encoding on the digital input signal,
   - first shuffling means for carrying out a data shuffling step on the digital input signal,
   - channel encoding means for converting the digital input signal processed in the error protection encoding means and the shuffling means into a recording signal suitable for recording on the magnetic record carrier,

   the encoder arrangement comprising

   - second error protection encoding means, having an input which is coupled to the input terminal of the encoder arrangement, and an output, for carrying out an error protection encoding step on packets of p m-bit digital words in the input signal received via its input, and for supplying error protection encoded packets ofn m-bit digital words to its output, where n, m and p are integers larger than 1, and n>p,
   - conversion means having an input and an output, for converting digital words comprised in the digital signal applied to its input into converted digital words so as to obtain a converted digital output signal, and for supplying the converted digital output signal to its output, the output being coupled to the output terminal of the encoder arrangement,

characterized in that the conversion means are adapted to convert the error protection encoded packets of n digital words, the conversion means comprising generator means for supplying a fixed auxiliary packet also having the length of n digital words, the conversion means further comprising calculation means for calculating in a Galois field $GF(2^m)$ the formula $DW_i + \alpha.FW_i$, where $DW_i$ is the binary value corresponding to the i-th digital word in the packet and $FW_i$ is the fixed binary value corresponding to the i-th digital word in the fixed auxiliary packet, where i is an integer value running from 1 to n, the calculation means being further adapted to determine that value $\alpha_{def}$ for $\alpha$, for which, for all the digital words $DW_i$ in a packet, the Galois field $GF2^m)$ calculation of $DW_i + \alpha_{def}.FW_i$ results in converted digital words $CW_i$ unequal to the at least one inadmissible dataword $DW_e$, the conversion means being further adapted to supply $\alpha_{def}$ together with the corresponding packet of converted digital words to its output.

2. Encoder arrangement as claimed in claim 1, characterized in that the output of the second error protection encoding means is coupled to the input of the conversion means.

3. Encoder arrangement as claimed in claim 1 or 2, characterized in that the conversion means is adapted to convert digital words in its input signal that are equal to an inadmissible digital word $DW_e$ for the D-type recording apparatus, into converted digital words that are admissible for the D-type recording apparatus.

4. Encoder arrangement as claimed in claim 1, characterized in that the n-p fixed binary values $FW_{p+1}$ to $FW_n$ of the fixed auxiliary packet have been obtained by an error protection encoding step carried out on the following packet of p+1 binary values:

$$['1', FW_1, FW_2, ... , FW_p],$$

where '1' is the m-bit digital word denoting the decimal value '1'.

5. Encoder arrangement as claimed in claim 4, characterized in that the conversion means are adapted to supply converted packets of n+1 digital words in the following form:

$$[\alpha_{def}, CW_1, CW_2, ...., CW_p, CW_{p+1}, .... , CW_n].$$

6. Encoder arrangement for converting a digital data signal into a digital input signal which is suitable for receiving by a magnetic recording apparatus of the D-type, for recording the input signal in tracks on a magnetic record carrier, the magnetic recording apparatus of the D-type comprising

- first error protection encoding means for carrying out an error protection encoding on the digital input signal,
- first shuffling means for carrying out a data shuffling step on the digital input signal,
- channel encoding means for converting the digital input signal processed in the error protection encoding means and the shuffling means into a recording signal suitable for recording on the magnetic record carrier,

the encoder arrangement comprising

- second error protection encoding means, having an input which is coupled to the input terminal of the encoder arrangement, and an output, for carrying out an error protection encoding step on packets of p m-bit digital words in the input signal received via its input, and for supplying error protection encoded packets of n m-bit digital words to its output, where n, m and p are integers larger than 1, and n>p,
- conversion means having an input and an output, for converting digital words comprised in the digital signal applied to its input into converted digital words so as to obtain a converted digital output signal, and for supplying the converted digital output signal to its output, the output being coupled to the output terminal of the encoder arrangement, characterized in that the conversion means are adapted to convert the error protection encoded packets of n digital words, the conversion means comprising generator means for supplying a first and a second fixed auxiliary packet also having the length of n digital words, the conversion means further comprising calculation means for calculating in a Galois field $GF(2^m)$ the formula $DW_i + \alpha.FW_i + \beta.GW_i$, where $DW_i$ is the binary value corresponding to the i-th digital word in the packet, $FW_i$ is the fixed binary value corresponding to the i-th digital word in the first fixed auxiliary packet, $GW_i$ is the fixed binary value corresponding to the i-th digital word in the second fixed auxiliary packet, where i is an integer value running from 1 to n, the calculation means being further adapted to determine that value $\alpha_{def}$ for $\alpha$ and $\beta_{def}$ for $\beta$, for which, for all the digital words $DW_i$ in a packet, the Galois field $GF2^m)$ calculation of $DW_i + \alpha_{def}.FW_i + \beta_{def}.GW_i$ results in converted digital words $CW_i$ unequal

to the at least one inadmissible dataword $DW_e$, the conversion means being further adapted to supply $\alpha_{def}$ and $\beta_{def}$ together with the corresponding packet of converted digital words to its output.

7. Decoder arrangement for converting a digital output signal from a magnetic reproducing apparatus of the D-type into a digital data signal, the magnetic reproducing apparatus of the D-type comprising

- channel decoding means for converting a signal read from the record carrier into a signal so as to obtain a channel decoded signal,
- first deshuffling means for carrying out a data deshuffling step on the signal applied to its input,
- first error correction decoding means for carrying out an error detection and correction on the signal applied to its input,

the decoder arrangement comprising

- second error correction decoding means having an input coupled to the input terminal of the decoder arrangement, and an output, for carrying out an error detection and correction on the digital signal applied to its input and for supplying an error corrected digital signal to its output,
- reconversion means having an input and an output, which output is coupled to the output terminal of the decoder arrangement, for reconverting digital words comprised in the digital signal applied to its input into reconverted digital words so as to obtain a reconverted digital output signal, and for supplying the reconverted digital output signal to its output, characterized in that the reconversion means are adapted to reconvert packets of digital words, each packet comprising n m-bit digital words, where n and m are integers larger than 1, the reconversion means comprising
- retrieval means for retrieving a value a, one $\alpha$ for each of the packets, from the information applied to the input of the reconversion means, and
- generator means for supplying a fixed auxiliary packet also having the length of n digital words, the reconversion means further comprising calculation means for calculating in a Galois field $GF(2^m)$ reconverted words in accordance with the formula $CW_i - \alpha.FW_i$, where $CW_i$ is the binary value corresponding to the i-th digital word in the packet and $FW_i$ is the fixed binary value corresponding to the i-th digital word in the fixed auxiliary packet, where i is an integer value running from 1 to n.

8. Decoder arrangement as claimed in claims 7, characterized in that the reconversion means are adapted to reconvert packets of digital words, each packet comprising n m-bit digital words, where n and m are integers larger than 1, the reconversion means comprising

- retrieval means for retrieving a value $\alpha$, one $\alpha$ for each of the packets, from the information applied to the input of the reconversion means, and
- generator means for supplying a fixed auxiliary packet also having the length of n digital words,

the reconversion means further comprising calculation means for calculating in a Galois field $GF(2^m)$ reconverted words in accordance with the formula $CW_i - \alpha.FW_i$, where $CW_i$ is the binary value corresponding to the i-th digital word in the packet and $FW_i$ is the fixed binary value corresponding to the i-th digital word in the fixed auxiliary packet, where i is an integer value running from 1 to n.

9. Decoder arrangement as claimed in claim 7, characterized in that the fixed auxiliary packet comprising the n digital words $FW_i$ equals the fixed auxiliary packet of the encoder arrangement of claim 1 or 4.

10. Decoder arrangement for converting a digital output signal from a magnetic reproducing apparatus of the D-type into a digital data signal, the magnetic reproducing apparatus of the D-type comprising

- channel decoding means for converting a signal read from the record carrier into a signal so as to obtain a channel decoded signal,
- first deshuffling means for carrying out a data deshuffling step on the signal applied to its input,
- first error correction decoding means for carrying out an error detection and correction on the signal applied to its input,

the decoder arrangement comprising

- second error correction decoding means having an input coupled to the input terminal of the decoder arrangement, and an output, for carrying out an error detection and correction on the digital signal applied to its input and for supplying an error corrected digital signal to its output,
- reconversion means having an input and an output, which output is coupled to the output terminal of the decoder arrangement, for reconverting digital words comprised in the digital signal applied to its input into reconverted digital words so as to obtain a reconverted digital output signal, and for supplying the reconverted digital output signal to its output, characterized in that the reconversion means are adapted to reconvert packets of digital words, each packet comprising n m-bit digital words, where n and m are integers larger than 1, the reconversion means comprising

- retrieval means for retrieving a value $\alpha$ and a value $\beta$, one value for $\alpha$ and one value for $\beta$ for each of the packets, from the information applied to the input of the reconversion means, and

- generator means for supplying a first and a second fixed auxiliary packet also having the length of n digital words,

the reconversion means further comprising calculation means for calculating in a Galois field $GF(2^m)$ reconverted words in accordance with the formula $CW_i - \alpha.FW_i - \beta.GW_i$, where $CW_i$ is the binary value corresponding to the i-th digital word in the packet, $FW_i$ is the fixed binary value corresponding to the i-th digital word in the first fixed auxiliary packet and $GW_i$ is the fixed binary value corresponding to the i-th digital word in the second fixed auxiliary packet, where i is an integer value running from 1 to n.

11. Method of converting a digital data signal into a digital input signal which is suitable for receiving by a magnetic recording apparatus of the D-type, for recording the input signal in tracks on a magnetic record carrier, the magnetic recording apparatus of the D-type comprising

- first error protection encoding means for carrying out an error protection encoding on the digital input signal,
- first shuffling means for carrying out a data shuffling step on the digital input signal,
- channel encoding means for converting the digital input signal processed in the error protection encoding means and the shuffling means into a recording signal suitable for recording on the magnetic record carrier,

the encoding method comprising the steps of

- carrying out an error protection encoding step on packets of p m-bit digital words a received signal, and supplying error protection encoded packets of n m-bit digital words, where n, m and p are integers larger than 1, and n>p,

converting digital words comprised in the digital signal into converted digital words so as to obtain a converted digital output signal, and supplying the converted digital output signal as an output signal, characterized in that the conversion step comprises the step of converting the error protection encoded packets of n digital words by supplying a fixed auxiliary packet also having the length of n digital words, calculating in a Galois field $GF(2^m)$ the formula $DW_i + \alpha.FW_i$, where $DW_i$ is the binary value corresponding to the i-th digital word in the packet and $FW_i$ is the fixed binary value corresponding to the i-th digital word in the fixed auxiliary packet, where i is an integer value running from 1 to n, determining that value $\alpha_{def}$ for $\alpha$, for which, for all the digital words $DW_i$ in a packet, the Galois field $GF2^m)$ calculation of $DW_i + \alpha_{def}.FW_i$ results in converted digital words $CW_i$ unequal to the at least one inadmissible dataword $DW_e$ and supplying $\alpha_{def}$ together with the corresponding packet of converted digital words.

12. Method of converting a digital data signal into a digital input signal which is suitable for receiving by a magnetic recording apparatus of the D-type, for recording the input signal in tracks on a magnetic record carrier, the magnetic recording apparatus of the D-type comprising

- first error protection encoding means for carrying out an error protection encoding on the digital input signal,
- first shuffling means for carrying out a data shuffling step on the digital input signal,
- channel encoding means for converting the digital input signal processed in the error protection encoding means and the shuffling means into a recording signal suitable for recording on the magnetic record carrier,

the encoding method comprising the steps of

- carrying out an error protection encoding step on packets of p m-bit digital words a received signal, and supplying error protection encoded packets of n m-bit digital words, where n, m and p are integers larger than 1, and n>p,

converting digital words comprised in the digital signal into converted digital words so as to obtain a converted digital output signal, and supplying the converted digital output signal as an output signal, characterized in that the conversion step comprises the step of converting the error protection encoded packets of n digital words by supplying a first and a second fixed auxiliary packet also having the length of n digital words, calculating in a Galois field $GF(2^m)$ the formula $DW_i + \alpha.FW_i + \beta.GW_i$, where $DW_i$ is the binary value corresponding to the i-th digital word in the packet, $FW_i$ is the fixed binary value corresponding to the i-th digital word in the first fixed auxiliary packet and $GW_i$ is the fixed binary value corresponding to the i-th digital word in the second fixed auxiliary packet, where i is an integer value running from 1 to n, determining that value $\alpha_{def}$ for $\alpha$, and $\beta_{def}$ for $\beta$, for which, for all the digital words $DW_i$ in a packet, the Galois field GF2$^m$) calculation of $DW_i + \alpha_{def}.FW_i \beta_{def}.GW_i$ results in converted digital words $CW_i$ unequal to the at least one inadmissible dataword $DW_e$ and supplying $\alpha_{def}$ and $\beta_{def}$ together with the corresponding packet of converted digital words.

13. Magnetic recording apparatus of the D-type, comprising an encoder arrangement as claimed in anyone of the preceding claims 1 to 7.

14. Magnetic reproducing apparatus of the D-type, comprising a decoder arrangement as claimed in anyone of the preceding claims 7 to 10.

EP 0 917 146 A1

FIG.1A

FIG.1B

FIG.2A

FIG.2B

FIG.3

$$CW_i = DW_i + \alpha \cdot FW_i$$

FIG.4

FIG.5

FIG.6

FIG.7

**European Patent Office**

**EUROPEAN SEARCH REPORT**

Application Number

EP 99 20 0345

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| A | JONG G. KIM ET AL.: "Record/playback interfaces: DSC-HDTV, HD-VCR and D3 VTR" IEEE TRANSACTIONS ON CONSUMER ELECTRONICS, vol. 39, no. 3, August 1993, pages 205-209, XP000396281 NEW YORK * page 205, column 1, line 1 - page 209, column 2, last line * | 1-14 | G11B20/18 H04N5/94 |
| A | "PROPOSED SMPTE STANDARD for Television Digital Recording - 1/2 in Type D-3 Composite Format - 625/50" SMPTE JOURNAL, vol. 102, no. 6, June 1993, pages 582-624, XP000372553 WHITE PLAINS, NY, US * paragraph 9.3 * | 1-14 | |
| A | US 5 083 206 A (AT&T BELL LABORATORIES) 21 January 1992 * column 1, line 7 - column 2, line 62 * | 1 | |

TECHNICAL FIELDS SEARCHED (Int.Cl.6)

G11B
H04N

The present search report has been drawn up for all claims

| Place of search | Date of completion of the search | Examiner |
|---|---|---|
| THE HAGUE | 25 March 1999 | Van Staveren, M |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

EP 0 917 146 A1

**ANNEX TO THE EUROPEAN SEARCH REPORT
ON EUROPEAN PATENT APPLICATION NO.**  EP 99 20 0345

This annex lists the patent family members relating to the patent documents cited in the above-mentioned European search report.
The members are as contained in the European Patent Office EDP file on
The European Patent Office is in no way liable for these particulars which are merely given for the purpose of information.

25-03-1999

| Patent document cited in search report | Publication date | Patent family member(s) | Publication date |
|---|---|---|---|
| US 5083206 A | 21-01-1992 | JP 4222187 A | 12-08-1992 |

EPO FORM P0459

For more details about this annex : see Official Journal of the European Patent Office, No. 12/82

17